# EUROPEAN PATENT APPLICATION

(11) **EP 4 243 232 A1**
(43) Date of publication of application: **13.09.2023**
(21) Application number: 23155354.6
(22) Date of filing: 07.02.2023
(51) Int. Cl.: H02J 1/14, C25B 15/02, H02J 15/00

(54) **DIRECT-CURRENT OFF-GRID PHOTOVOLTAIC HYDROGEN PRODUCTION SYSTEM AND METHOD FOR CONTROLLING THE SAME**

(30) Priority: 08.03.2022 CN 202210227261
(71) Applicant: Sungrow Hydrogen Sci.&Tech. Co., Ltd., Hefei 230088, Anhui (CN)
(72) Inventor: Jiang, Cai, Hefei, 230088 (CN); Wang, Xicheng, Hefei, 230088 (CN); Wang, Liang, Hefei, 230088 (CN); Sun, Longlin, Anhui, 230088 (CN)
(74) Representative: Epping - Hermann - Fischer

(57) **Abstract**

A direct-current off-grid photovoltaic hydrogen production system and a method for controlling the same are provided. The method is applied to a direct-current hydrogen production power supply in the direct-current off-grid photovoltaic hydrogen production system. The method includes: receiving an output electrical parameter instruction; determining an input voltage of the direct-current hydrogen production power supply, and determining a maximum limit based on a correspondence between the input voltage and the maximum limit; and determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode. The operation mode includes an MPPT mode and a non-MPPT mode. Therefore, the direct-current hydrogen production power supply can be self-adaptively controlled, thereby ensuring stability of the direct-current off-grid photovoltaic hydrogen production system while the direct-current hydrogen production power supply is capable of MPPT.

## Description

### FIELD

The present disclosure relates to the technical field of off-grid photovoltaic hydrogen production, and in particular to a direct-current off-grid photovoltaic hydrogen production system and a method for controlling the direct-current off-grid photovoltaic hydrogen production system.

### BACKGROUND

A direct-current off-grid photovoltaic hydrogen production system includes a photovoltaic array, a direct-current hydrogen production power supply, an electrolyzer and a hydrogen production system controller. A main power circuit of the direct-current off-grid photovoltaic hydrogen production system includes no power grid and no energy storage device such as an energy storage battery. According to the conventional technology, the direct-current hydrogen production power supply is controlled to operate in the maximum power point tracking (MPPT) mode, to calculate/detect an outputted electrical parameter by the direct-current hydrogen production power supply. The direct-current hydrogen production power supply receives an output electrical parameter instruction from the hydrogen production system controller. In a case that the outputted electrical parameter is greater than or equal to a value indicated by the output electrical parameter instruction, the direct-current hydrogen production power supply stops operating in the MPPT mode, and the direct-current hydrogen production power supply operates based on the output electrical parameter instruction so as to modify the outputted electrical parameter. In a case that the outputted electrical parameter is less than the value indicated by the output electrical parameter instruction, the direct-current hydrogen production power supply remains in the MPPT mode.

However, the direct-current hydrogen production power supply fails to be informed of a sudden change in photovoltaic power in time and thus fails to respond to the sudden change timely in a case of a sudden drop in the photovoltaic power since the sudden drop lasts for less than 10ms while a period for the MPPT mode is greater than 100ms, resulting in oscillation in an input voltage of the direct-current hydrogen production power supply, and even that the input voltage sharply drops to be less than an operation voltage of the direct-current hydrogen production power supply. As a result, the direct-current hydrogen production power supply power shuts down due to failure or power cut, and the hydrogen production system is triggered abnormally, and there is a potential safety hazard.

### SUMMARY

In view of this, a direct-current off-grid photovoltaic hydrogen production system and a method for controlling the direct-current off-grid photovoltaic hydrogen production system are provided according to the present disclosure, so that the direct-current hydrogen production power supply can be self-adaptively controlled, thereby ensuring stability of the direct-current off-grid photovoltaic hydrogen production system while the direct-current hydrogen production power supply is capable of MPPT.

A method for controlling a direct-current off-grid photovoltaic hydrogen production system is provided according to a first aspect of the present disclosure. The method is applied to a direct-current hydrogen production power supply in the direct-current off-grid photovoltaic hydrogen production system. The method includes: receiving an output electrical parameter instruction; determining an input voltage of the direct-current hydrogen production power supply, and determining a maximum limit based on a correspondence between the input voltage and the maximum limit; and determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode. The operation mode includes an MPPT mode and a non-MPPT mode.

In an embodiment, the method further includes: determining the currently outputted electrical parameter of the direct-current hydrogen production power supply before the determining an operation mode of the direct-current hydrogen production power supply based on the output electrical parameter instruction, the maximum limit and a currently outputted electrical parameter of the direct-current hydrogen production power supply.

In an embodiment, the maximum limit includes at least one of a maximum outputted electrical parameter, a duty cycle limit or a conduction angle limit.

In an embodiment, the determining an operation mode of the direct-current hydrogen production power supply based on the output electrical parameter instruction, the maximum limit and a currently outputted electrical parameter of the direct-current hydrogen production power supply includes: determining whether the currently outputted electrical parameter of the direct-current hydrogen production power supply is greater than or equal to a value indicated by the output electrical parameter instruction; controlling the direct-current hydrogen production power supply to operate in the non-MPPT mode in a case that the currently outputted electrical parameter of the direct-current hydrogen production power supply is greater than or equal to the value indicated by the output electrical parameter instruction; and controlling the direct-current hydrogen production power supply to operate in the MPPT mode in a case that the currently outputted electrical parameter of the direct-current hydrogen production power supply is less than the value indicated by the output electrical parameter instruction.

In an embodiment, the modifying an actually outputted electrical parameter of the direct-current hydrogen production power supply in the determined operation mode includes: controlling, based on the output electrical parameter instruction that serves as a control instruction, the direct-current hydrogen production power supply to operate in the non-MPPT mode, to modify the actually outputted electrical parameter of the direct-current hydrogen production power supply in the non-MPPT mode to be equal to the value indicated by the output electrical parameter instruction.

In an embodiment, the method further includes: after the determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode, determining whether the input voltage of the direct-current hydrogen production power supply is less than a preset voltage threshold; and modifying the actually outputted electrical parameter of the direct-current hydrogen production power supply in the non-MPPT mode based on the maximum limit that serves as the control instruction in a case that the input voltage of the direct-current hydrogen production power supply is less than the preset voltage threshold.

In an embodiment, the maximum limit is a maximum outputted electrical parameter. The modifying the actually outputted electrical parameter of the direct-current hydrogen production power supply in the non-MPPT mode based on the maximum limit that serves as the control instruction includes: modifying the actually outputted electrical parameter of the direct-current hydrogen production power supply in the non-MPPT mode based on the maximum outputted electrical parameter that serves as the control instruction.

In an embodiment, the maximum limit is a duty cycle limit or a conduction angle limit. The modifying the actually outputted electrical parameter of the direct-current hydrogen production power supply in the non-MPPT mode based on the maximum limit that serves as the control instruction includes: controlling, based on the duty cycle limit or the conduction angle limit that serves as the control instruction, a power electronic switching device in the direct-current hydrogen production power supply to be turned on or off, so as to modify the actually outputted electrical parameter of the direct-current hydrogen production power supply in the non-MPPT mode.

In an embodiment, the maximum limit is a duty cycle limit or a conduction angle limit. The method further includes: after the determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode, controlling a power electronic switching device in the direct-current hydrogen production power supply based on the duty cycle limit in a case that a calculated duty cycle of the power electronic switching device is greater than the duty cycle limit, or controlling the power electronic switching device in the direct-current hydrogen production power supply based on the conduction angle limit in a case that a calculated conduction angle of the power electronic switching device is greater than the conduction angle limit; and controlling the power electronic switching device in the direct-current hydrogen production power supply based on the calculated duty cycle in a case that the calculated duty cycle of the power electronic switching device is less than or equal to the duty cycle limit, or controlling the power electronic switching device in the direct-current hydrogen production power supply based on the calculated conduction angle in a case that the calculated conduction angle of the power electronic switching device is less than or equal to the conduction angle limit.

In an embodiment, the determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mod includes: determining a minimum between a value indicated by the output electrical parameter instruction and the maximum limit as a target output; and determining the operation mode of the direct-current hydrogen production power supply based on the currently outputted electrical parameter of the direct-current hydrogen production power supply and the target output, and modifying the actually outputted electrical parameter of the direct-current hydrogen production power supply in the determined operation mode.

In an embodiment, the determining the operation mode of the direct-current hydrogen production power supply based on the currently outputted electrical parameter of the direct-current hydrogen production power supply and the target output, and modifying the actually outputted electrical parameter of the direct-current hydrogen production power supply in the determined operation mode includes: determining whether the currently outputted electrical parameter is greater than or equal to the target output; controlling the direct-current hydrogen production power supply to operate in the non-MPPT mode, and modifying the actually outputted electrical parameter of the direct-current hydrogen production power supply based on the target output that serves as a control instruction, in a case that the currently outputted electrical parameter is greater than or equal to the target output; and controlling the direct-current hydrogen production power supply to operate in the MPPT mode in a case that the currently outputted electrical parameter is lower than the target output.

In an embodiment, a maximum outputted electrical parameter, a value indicated by the output electrical parameter instruction, the currently outputted electrical parameter and the actually outputted electrical parameter each include at least one of a voltage, a current and a power.

A direct-current off-grid photovoltaic hydrogen production system is provided according to a second aspect of the present disclosure. The direct-current off-grid photovoltaic hydrogen production system includes a photovoltaic array, a direct-current hydrogen production power supply, an electrolyzer and a hydrogen production system controller. An output end of the photovoltaic array is connected to an input end of the direct-current hydrogen production power supply. An output end of the direct-current hydrogen production power supply is connected to the electrolyzer. The direct-current hydrogen production power supply is in communication connection with the hydrogen production system controller. The direct-current hydrogen production power supply is configured to perform the method for controlling a photovoltaic direct-current off-grid hydrogen production system according to the first aspect of the present disclosure.

In an embodiment, the direct-current off-grid photovoltaic hydrogen production system further includes a direct-current photovoltaic power supply arranged between the photovoltaic array and the direct-current hydrogen production power supply.

It can be seen from the above technical solutions that a method for controlling a direct-current off-grid photovoltaic hydrogen production system is provided according to the present disclosure, the method is applied to a direct-current hydrogen production power supply in the direct-current off-grid photovoltaic hydrogen production system. The method includes: receiving an output electrical parameter instruction; determining an input voltage of the direct-current hydrogen production power supply, and determining a maximum limit based on a correspondence between the input voltage and the maximum limit; and determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode. The operation mode includes an MPPT mode and a non-MPPT mode. Therefore, the direct-current hydrogen production power supply can be self-adaptively controlled, thereby ensuring stability of the direct-current off-grid photovoltaic hydrogen production system while the direct-current hydrogen production power supply is capable of MPPT.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.
Figure 1 is a flow chart illustrating a method for controlling a direct-current off-grid photovoltaic hydrogen production system according to an embodiment of the present disclosure;
Figure 2 is a flow chart illustrating a method for controlling a direct-current off-grid photovoltaic hydrogen production system according to another embodiment of the present disclosure;
Figure 3 is a flow chart illustrating a method for controlling a direct-current off-grid photovoltaic hydrogen production system according to another embodiment of the present disclosure;
Figure 4 is a flow chart illustrating a method for controlling a direct-current off-grid photovoltaic hydrogen production system according to another embodiment of the present disclosure;
Figure 5 is a flow chart illustrating a method for controlling a direct-current off-grid photovoltaic hydrogen production system according to another embodiment of the present disclosure;
Figure 6 is a flow chart illustrating a method for controlling a direct-current off-grid photovoltaic hydrogen production system according to another embodiment of the present disclosure;
Figure 7 is a schematic diagram illustrating a direct-current off-grid photovoltaic hydrogen production system according to an embodiment of the present disclosure; and
Figure 8 is a schematic diagram illustrating a direct-current off-grid photovoltaic hydrogen production system according to another embodiment of the present disclosure.

### DETAILED DESCRIPTION

In order to make the objects, technical solutions and advantages of the embodiments of the present disclosure clearer, the technical solutions in the embodiments of the present disclosure are described clearly and completely in conjunction with the drawings of the embodiments of the present disclosure hereinafter. It is apparent that the described embodiments are only some rather than all embodiments of the present disclosure. Any other embodiments obtained by those skilled in the art based on the embodiments in the present disclosure without any creative effort shall fall within the protection scope of the present disclosure.

In this specification, terms "include", "comprise" or any other variants are intended to be non-exclusive. Therefore, a process, method, article or device including a series of elements includes not only the listed elements but also other elements that are not enumerated, or also include elements inherent for the process, method, article or device. Unless expressively limited otherwise, the statement "comprising (including) one..." does not exclude the case that other similar elements may exist in the process, method, article or device.

A method for controlling a direct-current off-grid photovoltaic hydrogen production system is provided according to an embodiment of the present disclosure, to solve the existing technical problem that the direct-current hydrogen production power supply fails to be informed of a sudden change in the photovoltaic power in time and thus fails to respond to the sudden change timely in a case of a sudden drop in the photovoltaic power since the sudden drop lasts for less than 10ms while a period for the MPPT mode is greater than 100ms, resulting in oscillation in an input voltage of the direct-current hydrogen production power supply, and even that the input voltage sharply drops to be less than an operation voltage of the direct-current hydrogen production power supply, and thus finally the direct-current hydrogen production power supply power shuts down due to failure or power cut, the hydrogen production system is triggered abnormally, and there is a potential safety hazard.

The direct-current off-grid photovoltaic hydrogen production system includes a photovoltaic array, a direct-current hydrogen production power supply, an electrolyzer and a hydrogen production system controller. A main power circuit of the direct-current off-grid photovoltaic hydrogen production system incudes no power grid and no energy storage device such as an energy storage battery. The method for controlling a direct-current off-grid photovoltaic hydrogen production system is applied to the direct-current hydrogen production power supply in the direct-current off-grid photovoltaic hydrogen production system.

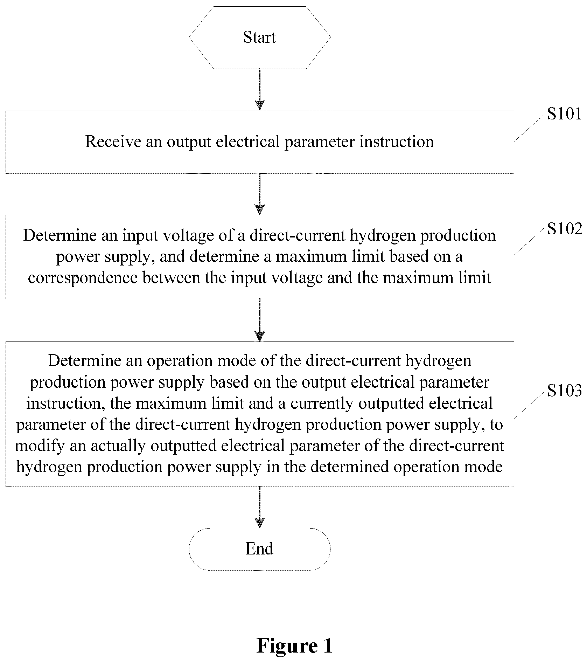

As shown in Figure 1, the method for controlling a direct-current off-grid photovoltaic hydrogen production system includes the following steps S101 to S103.

In step S101, an output electrical parameter instruction is received.

It should be noted that the photovoltaic array in the direct-current off-grid photovoltaic hydrogen production system outputs a direct-current voltage when being illuminated by sun light. The direct-current hydrogen production power supply starts on receipt of a start-up instruction from the hydrogen production system controller, and then the hydrogen production system controller controls the direct-current hydrogen production power supply to operate. For example, the hydrogen production system controller sends the output electrical parameter instruction to the direct-current hydrogen production power supply, so that the direct-current hydrogen production power supply operates based on the output electrical parameter instruction.

The direct-current hydrogen production power supply in the present disclosure, however, is capable of being self-adaptively controlled. That is, the direct-current hydrogen production power supply operates on receipt of the output electrical parameter instruction rather than operates based on the output electrical parameter instruction, so as to ensure the stability of the direct-current off-grid photovoltaic hydrogen production system while the direct-current hydrogen production power supply is capable of MPPT.

In practice, the electrical parameter includes one of a power, a current, a voltage. Alternatively, the electrical parameter includes two or more of a power, a current, a voltage.

In step S102, an input voltage of the direct-current hydrogen production power supply is determined, and a maximum limit is determined based on a correspondence between the input voltage and the maximum limit.

It should be noted that an output of the direct-current hydrogen production power supply depends on the input voltage of the direct-current hydrogen production power supply. For this reason, the input voltage and the maximum limit are determined, and the method proceeds to the following step S103.

The input voltage of the direct-current hydrogen production power supply may be detected by a detection unit. Alternatively, the input voltage of the direct-current hydrogen production power supply may be calculated.

The step S102 is not described in detail herein, as long as the input voltage of the direct-current hydrogen production power supply can be determined.

It should be noted that the maximum limit varies with the input voltage. The correspondence between the input voltage and the maximum limit may be predetermined, depending on the actual applications.

In practice, the maximum limit is a maximum outputted electrical parameter, and/or, a duty cycle limit or a conduction angle limit. The maximum limit may further include other limits depending on the actual applications, which are not listed herein.

In step S103, an operation mode of the direct-current hydrogen production power supply is determined based on the output electrical parameter instruction, the maximum limit and a currently outputted electrical parameter of the direct-current hydrogen production power supply, to modify an actually outputted electrical parameter of the direct-current hydrogen production power supply in the determined operation mode.

The operation mode includes an MPPT mode and a non-MPPT mode. The non-MPPT mode is an operation mode rather than the MPPT mode, and includes a constant voltage (CV) mode, a constant current (CC) mode, a constant power (CP) and the like. Details of the non-MPPT mode is not limited herein.

It should be noted that the currently outputted electrical parameter of the direct-current hydrogen production power supply may be detected by a detection unit or may be calculated, which is not described in detail herein.

The operation mode may be determined based on the output electrical parameter instruction, the maximum limit and the currently outputted electrical parameter of the direct-current hydrogen production power supply. Alliteratively, the operation mode may be determined based on two of the output electrical parameter instruction, the maximum limit and the currently outputted electrical parameter of the direct-current hydrogen production power supply. In a case that the currently outputted electrical parameter of the direct-current hydrogen production power supply is less than a value indicated by the output electrical parameter instruction, the direct-current hydrogen production power supply operates in the MPPT mode. In a case that the currently outputted electrical parameter of the direct-current hydrogen production power supply is greater than or equal to the value indicated by the output electrical parameter instruction, the direct-current hydrogen production power supply stops operating in the MPPT mode.

Alternatively, the operation mode may be determined based on the currently outputted electrical parameter of the direct-current hydrogen production power supply and the output electrical parameter instruction, which is not described in detail herein.

The determination of the operation mode based on the output electrical parameter instruction, the maximum limit and the currently outputted electrical parameter of the direct-current hydrogen production power supply depends on actual applications, and thus is not described in detail herein.

It should be noted that after the operation mode of the direct-current hydrogen production power supply is determined, the actually outputted electrical parameter of the direct-current hydrogen production power supply in the determined operation mode is modified, so that actually outputted electrical parameters of the direct-current hydrogen production power supply in various operation modes can be modified.

The actually outputted electrical parameter of the direct-current hydrogen production power supply is modified so as to match the determined operation mode, such that the direct-current hydrogen production power supply can be self-adaptively controlled.

In this embodiment, the output electrical parameter instruction is received. The input voltage of the direct-current hydrogen production power supply is determined. The maximum limit is determined based on the correspondence between the input voltage and the maximum limit. The operation mode of the direct-current hydrogen production power supply is determined based on the output electrical parameter instruction, the maximum limit and the currently outputted electrical parameter of the direct-current hydrogen production power supply. The actually outputted electrical parameter of the direct-current hydrogen production power supply in the determined operation mode is modified. The operation mode includes the MPPT mode and a non-MPPT mode. Therefore, the direct-current hydrogen production power supply can be self-adaptively controlled, thereby ensuring stability of the direct-current off-grid photovoltaic hydrogen production system while the direct-current hydrogen production power supply is capable of MPPT.

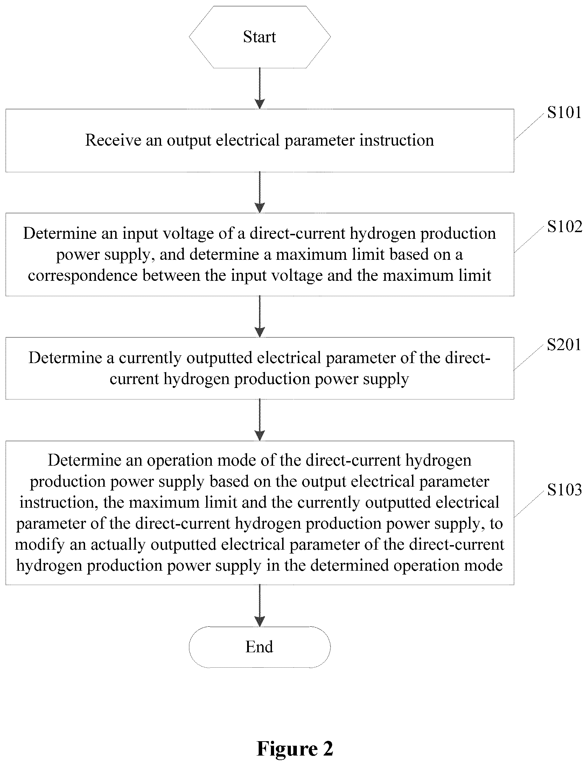

In practice, as shown in Figure 2, before step S103 in which the operation mode of the direct-current hydrogen production power supply is determined based on the output electrical parameter instruction, the maximum limit and the currently outputted electrical parameter of the direct-current hydrogen production power supply to modify the actually outputted electrical parameter of the direct-current hydrogen production power supply in the determined operation mode, the method further includes the following step S201.

In step S201, the currently outputted electrical parameter of the direct-current hydrogen production power supply is determined.

It should be noted that the currently outputted electrical parameter of the direct-current hydrogen production power supply is a factor for determining the operation mode of the direct-current hydrogen production power supply. Therefore, the currently outputted electrical parameter of the direct-current hydrogen production power supply is determined before the operation mode is determined.

The currently outputted electrical parameter of the direct-current hydrogen production power supply is determined in various manners, for example, being detected by the detection unit or being calculated, depending on actual applications, which are not described in detail herein.

In a case that the currently outputted electrical parameter is an outputted voltage, the voltage may be detected by a voltage sensor. In a case that the currently outputted electrical parameter is an outputted current, the outputted current may be detected by a current sensor. In a case that the currently outputted electrical parameter is an outputted power, the outputted power is detected in a similar manner with the outputted voltage or current. Details are not given herein.

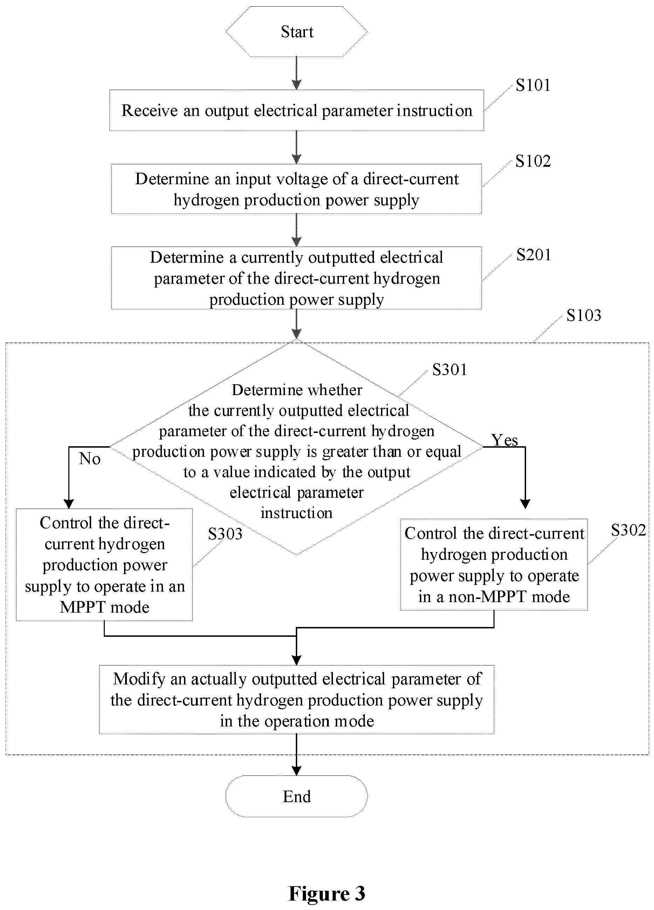

In practice, as shown in Figure 3, the determination of the operation mode of the direct-current hydrogen production power supply based on the output electrical parameter instruction, the maximum limit and the currently outputted electrical parameter of the direct-current hydrogen production power supply in step S103 includes the following steps S301 to S303.

In step S301, it is determined whether the currently outputted electrical parameter of the direct-current hydrogen production power supply is greater than or equal to the value indicated by the output electrical parameter instruction.

It should be noted that a determination result that the currently outputted electrical parameter of the direct-current hydrogen production power supply is greater than or equal to the value indicated by the output electrical parameter instruction indicates that the currently outputted electrical parameter of the direct-current hydrogen production power supply is greater than a desired value, and the method proceeds to step S302.

In step S302, the direct-current hydrogen production power supply switches from the MPPT mode to the non-MPPT mode.

In practice, the actually outputted electrical parameter of the direct-current hydrogen production power supply in the determined operation mode is modified in step S103 as follows. The direct-current hydrogen production power supply, operating in the non-MPPT mode, operates based on the output electrical parameter instruction which serves as a control instruction, so that an actually outputted electrical parameter of the direct-current hydrogen production power supply in the non-MPPT mode is the value indicated by the output electrical parameter instruction.

It should be noted that in a case that the currently outputted electrical parameter of the direct-current hydrogen production power supply is less than the value indicated by the output electrical parameter instruction, the currently outputted electrical parameter of the direct-current hydrogen production power supply fails to meet the desired value, and the method proceeds to step S303 to control the direct-current hydrogen production power supply to output at a maximum capacity.

In step S303, the direct-current hydrogen production power supply switches to the MPPT mode.

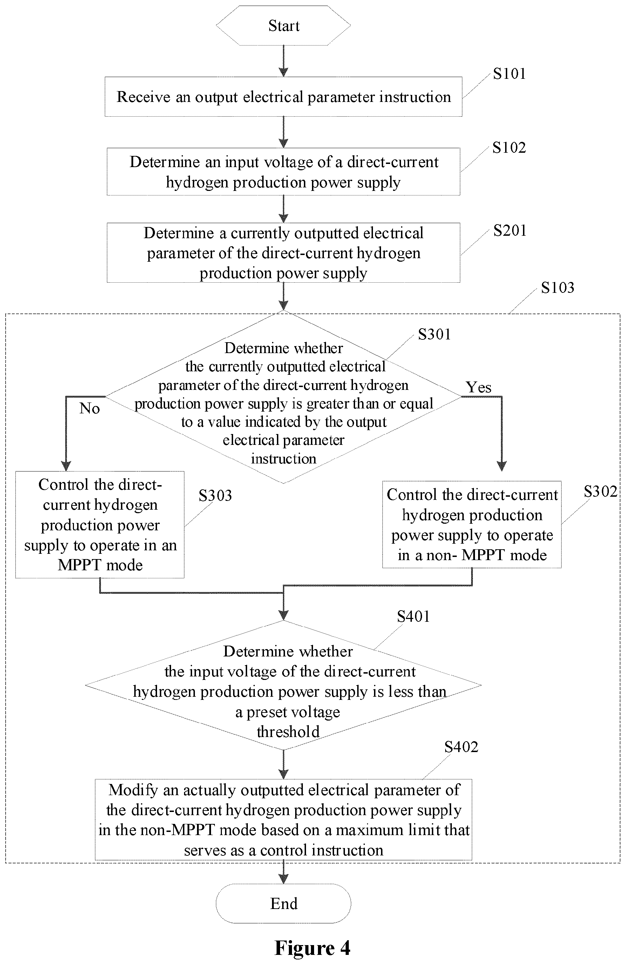

In practice, as shown in Figure 4, after step S103 in which the operation mode of the direct-current hydrogen production power supply is determined based on the output electrical parameter instruction, the maximum limit and the currently outputted electrical parameter of the direct-current hydrogen production power supply to modify the actually outputted electrical parameter of the direct-current hydrogen production power supply in the determined operation mode, the method further includes the following steps S401 and S402.

In step S401, it is determined whether the input voltage of the direct-current hydrogen production power supply is less than a preset voltage threshold.

It can be seen from the above description that the input voltage of the direct-current hydrogen production power supply and the preset voltage threshold are compared in order to modify the output of the direct-current hydrogen production power supply.

In a case that the input voltage of the direct-current hydrogen production power supply is less than the preset voltage threshold, the actually outputted electrical parameter is modified based on a maximum output corresponding to the input voltage that serves as the control instruction. That is, the output of the direct-current hydrogen production power supply is modified as the input voltage decreases, in order to ensure the stability of the direct-current off-grid photovoltaic hydrogen production system.

It should be noted that in a case that the input voltage is less than the preset voltage threshold, the direct-current off-grid photovoltaic hydrogen production system may be unstable when the direct-current hydrogen production power supply remains in a mode, for example, the MPPT mode. Therefore, the actually outputted electrical parameter of the direct-current hydrogen production power supply is modified based on the maximum output corresponding to the input voltage that serves as the control instruction. The maximum output corresponding to the input voltage is less than the outputted electrical parameter in the MPPT mode.

Therefore, the determination result that the input voltage of the direct-current hydrogen production power supply is less than the preset voltage threshold indicates that the input voltage of the direct-current hydrogen production power supply is small, that is, a photovoltaic output voltage is small, and thus there may be a sudden drop in the photovoltaic power. In this case, the actually outputted power parameter of the direct-current hydrogen production power supply is modified so as to avoid the oscillation of the direct-current off-grid photovoltaic hydrogen production system, and the method proceeds to step S402.

In step S402, the actually outputted electrical parameter of the direct-current hydrogen production power supply in the non-MPPT mode is modified based on the maximum limit that serves as the control instruction.

The actually outputted electrical parameter of the direct-current hydrogen production power supply in the non-MPPT mode is modified based on the maximum limit that serves as the control instruction in various manners, two of which are described below.

In a first manner, the maximum limit is a maximum outputted electrical parameter. The maximum outputted electrical parameter is acquired based on the input voltage from a predetermined correspondence between the input voltage and the maximum outputted electrical parameter. The actually outputted electrical parameter of the direct-current hydrogen production power supply in the non-MPPT mode is modified based on the maximum outputted electrical parameter that serves as the control instruction.

The following description is given with an operation of the direct-current off-grid photovoltaic hydrogen production system as an example.
1. The photovoltaic array outputs a direct-current voltage when being illuminated by sun light.
2. The direct-current hydrogen production power supply starts on receipt of a start-up instruction from the hydrogen production system controller.
3. The direct-current hydrogen production power supply receives the output electrical parameter instruction from the hydrogen production system controller, for example, one of an output voltage instruction Uref, an output current instruction Iref, and an output power instruction Pref.
4. The direct-current hydrogen production power supply operates in the MPPT mode, to calculate/detect the currently outputted electrical parameter, for example, one of an outputted voltage Ufdb, an outputted current Ifdb and an outputted power Pfdb. The currently outputted electrical parameter is in the same type as the output electrical parameter instruction.

It should be noted that the direct-current hydrogen production power supply may directly output the electrical parameter.

5. In a case that the currently outputted electrical parameter is greater than or equal to the value indicated by the output electrical parameter instruction, the actually outputted electrical parameter of the direct-current hydrogen production power supply is modified based on the output electrical parameter instruction. In a case that the currently outputted electrical parameter is less than the value indicated by the output electrical parameter instruction, the direct-current hydrogen production power supply remains in the MPPT mode.

The outputted voltage Ufdb is compared with a voltage indicated by the output voltage instruction Uref. The outputted current Ifdb is compared with a current indicated by the output current instruction Iref. The outputted power Pfdb is compared with a power indicated by the output power instruction Pref.
6. An input voltage Vpv of the direct-current hydrogen production power supply and the preset voltage threshold are determined.
6.1. In a case that the input voltage Vpv of the direct-current hydrogen production power supply is less than the preset voltage threshold, the method proceeds to at least one of 6.1.1 and 6.1.2 before 6.1.3.
6.1.1. The maximum outputted electrical parameter is determined based on a predetermined correspondence between the input voltage Vpv and the maximum outputted electrical parameter (for example, a maximum outputted voltage Umax, a maximum outputted current Imax or a maximum outputted power Pmax), and the actually outputted electrical parameter of the direct-current hydrogen production power supply is modified based on the maximum outputted electrical parameter.
6.1.2. A duty cycle limit duty_limit is acquired based on a predetermined correspondence between the input voltage Vpv and a duty cycle of a power electronic switching device, or a conduction angle limit ang_limit is acquired based on a predetermined correspondence between the input voltage Vpv and a conduction angle of the power electronic switching device. The power electronic switching device in the direct-current hydrogen production power supply is controlled based on the duty cycle limit duty_limit or the conduction angle limit ang_limit, so as to modify the actually outputted electrical parameter of the direct-current hydrogen production power supply.

In a case of both 6.1.2 and 6.1.1 and the actually outputted electrical parameter in 6.1.1 is different from the actually outputted electrical parameter in 6.1.2, one of 6.1.2 and 6.1.1 based on which the actually outputted electrical parameter is modified to be lower prevails.
6.1.3. Processing 3 to 6 is repeated.
6.2. In a case that the input voltage Vpv of the direct-current hydrogen production power supply is greater than or equal to the preset voltage threshold, processing 3 to 6 is repeated.

It should be noted that the direct-current hydrogen production power supply, when currently operating in the MPPT mode, stops operating in the MPPT mode and then perform an operation in order to operate in the non-MPPT mode. The preset voltage threshold is normally less than or equal to a minimum at a full load in MPPT mode.

In a second manner, the maximum limit is the duty cycle limit or the conduction angle limit, the duty cycle limit is acquired based on the input voltage from the predetermined correspondence between the input voltage and the duty cycle of the power electronic switching device, or the conduction angle limit is acquired based on the input voltage from the predetermined correspondence between the input voltage and the conduction angle of the power electronic switching device. The power electronic switching device in the direct-current hydrogen production power supply is controlled to be turned on or off based on the duty cycle limit or the conduction angle limit that serves as the control instruction, so as to modify the actually outputted electrical parameter of the direct-current hydrogen production power supply in the non-MPPT mode.

In practice, after step S103 in which the operation mode of the direct-current hydrogen production power supply is determined based on the output electrical parameter instruction, the maximum limit and the currently outputted electrical parameter of the direct-current hydrogen production power supply to modify the actually outputted electrical parameter of the direct-current hydrogen production power supply in the determined operation mode, the method further includes: controlling the power electronic switching device in the direct-current hydrogen production power supply based on the duty cycle limit in a case that the calculated duty cycle of the power electronic switching device is greater than the duty cycle limit, or controlling the power electronic switching device in the direct-current hydrogen production power supply based on the conduction angle limit in a case that the calculated conduction angle of the power electronic switching device is greater than the conduction angle limit; and controlling the power electronic switching device in the direct-current hydrogen production power supply based on the calculated duty cycle in a case that the calculated duty cycle of the power electronic switching device is less than or equal to the duty cycle limit; or controlling the power electronic switching device in the direct-current hydrogen production power supply based on the calculated conduction angle in a case that the calculated conduction angle of the power electronic switching device is less than or equal to the conduction angle limit.

The following description is given with an operation of the direct-current off-grid photovoltaic hydrogen production system as an example.
1. The photovoltaic array outputs a direct-current voltage when being illuminated by sun light.
2. The direct-current hydrogen production power supply starts on receipt of a start-up instruction from the hydrogen production system controller.
3. The direct-current hydrogen production power supply receives one of an output voltage instruction Uref, an output current instruction Iref, and an output power instruction Pref from the hydrogen production system controller.
4. The input voltage Vpv of the direct-current hydrogen production power supply is calculated/detected, a duty cycle limit duty_limit is acquired based on a predetermined correspondence between the input voltage Vpv and a duty cycle of a power electronic switching device, or a conduction angle limit ang_limit is acquired based on a predetermined correspondence between the input voltage Vpv and a conduction angle of the power electronic switching device.
5. A currently outputted electrical parameter of the direct-current hydrogen production power supply is calculated/detected.
6. In a case that the currently outputted electrical parameter is greater than or equal to the value indicated by the output electrical parameter instruction, the actually outputted electrical parameter of the direct-current hydrogen production power supply is modified based on the output electrical parameter instruction. In a case that the currently outputted electrical parameter is less than the value indicated by the output electrical parameter instruction, the direct-current hydrogen production power supply remains in the MPPT mode.
7. During the operation of the direct-current hydrogen production power supply, in a case that the calculated duty cycle of the power electronic switching device is greater than the duty cycle limit duty_limit, or the calculated conduction angle of the power electronic switching device is greater than the conduction angle limit ang_limit, the power electronic switching device in the direct-current hydrogen production power supply is controlled based on the duty cycle limit duty_limit or the conduction angle limit ang_limit. In a case that the calculated duty cycle of the power electronic switching device is less than or equal to the duty cycle limit duty_limit, or the calculated conduction angle of the power electronic switching device is less than or equal to the conduction angle limit ang_limit, the power electronic switching device in the direct-current hydrogen production power supply is controlled based on the calculated duty cycle or the calculated conduction angle.
8. Processing 3 to 8 is repeated.

It should be noted that the correspondence between the input voltage Vpv of the direct-current hydrogen production power supply and the duty cycle limit duty_limit may be represented as a function: duty_limit=function(Vpv).

The function is a monotone nondecreasing function. That is, Vpv is in one to one correspondence with duty_limit. For example, there is duty_limit=(Vpv-800)/1300, where an upper limit is 1, and a lower limit is 0.

Similarly, the correspondence between the input voltage Vpv of the direct-current hydrogen production power supply and the conduction angle limit ang_limit may be represented as a monotone nondecreasing function.

It should be noted that a monotone nondecreasing function f(x) is defined as follows. For two independent variables x1 and x2, there is constantly f(x1)≥f(x2) in a case of x1>x2.

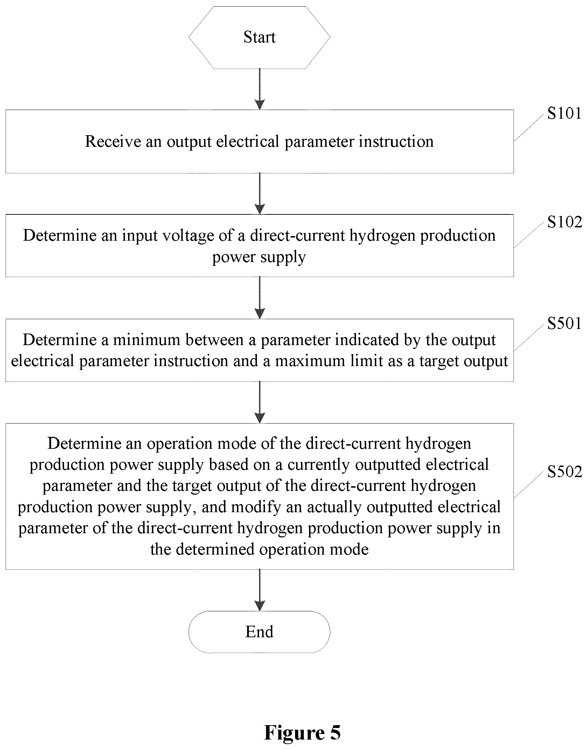

In practice, as shown in Figure 5, step S103 in which the operation mode of the direct-current hydrogen production power supply is determined based on the output electrical parameter instruction, the maximum limit and the currently outputted electrical parameter of the direct-current hydrogen production power supply to modify the actually outputted electrical parameter of the direct-current hydrogen production power supply in the determined operation mode includes the following steps S501 and S502.

In step S501, a minimum between the value indicated by the output electrical parameter instruction and the maximum limit is determined as a target output.

In step S502, the operation mode of the direct-current hydrogen production power supply is determined based on the currently outputted electrical parameter and the target output, and the actually outputted electrical parameter of the direct-current hydrogen production power supply in the determined operation mode is modified.

That is, the operation mode of the direct-current hydrogen production power supply is determined based on the currently outputted electrical parameter of the direct-current hydrogen production power supply and the minimum between the value indicated by the output electrical parameter instruction and the maximum limit corresponding to the input voltage. That is, the minimum between the value indicated by the output electrical parameter instruction and the maximum limit corresponding to the input voltage is a factor for determining the operation mode of the direct-current hydrogen production power supply.

The operation mode may be determined based on a comparison of the currently outputted electrical parameter of the direct-current hydrogen production power supply and the target output. For example, in a case that the currently outputted electrical parameter is less than the target output, the direct-current hydrogen production power supply operates in the MPPT mode. In a case that the currently outputted electrical parameter is greater than or equal to the target output, the direct-current hydrogen production power supply stops operating in the MPPT mode, and the actually outputted electrical parameter of the direct-current hydrogen production power supply is modified based on the target output serving as the control instruction.

Alternatively, the operation mode may be determined based on a range in which the comparison of the currently outputted electrical parameter and the target output the direct-current hydrogen production power supply varies, which is not described in detail herein.

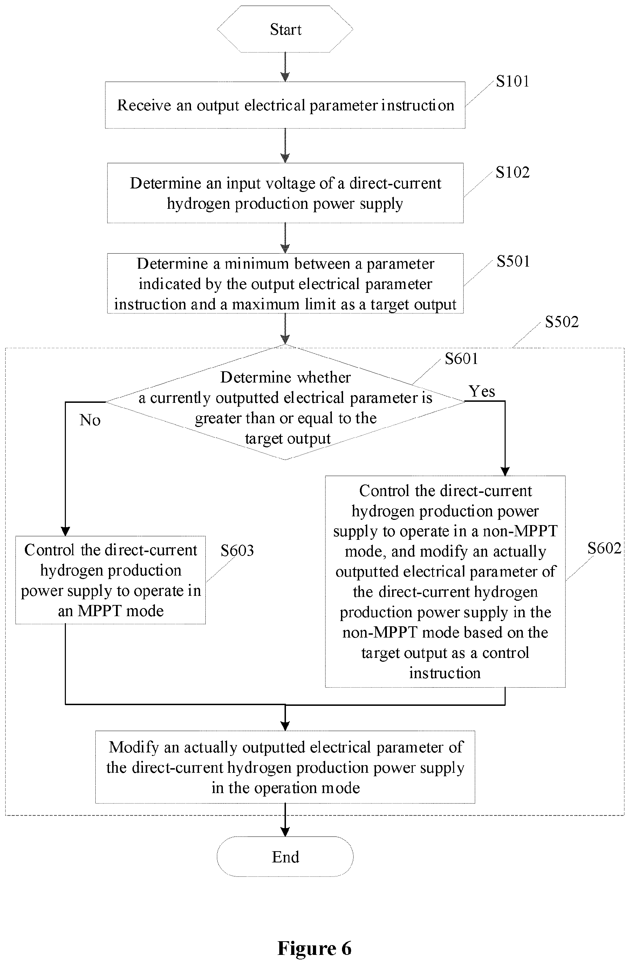

As shown in Figure 6, in practice, the determination of the operation mode of the direct-current hydrogen production power supply based on the currently outputted electrical parameter and the target output of the direct-current hydrogen production power supply in step S502 includes the following steps S601 to S603.

In step S601, it is determined whether the currently outputted electrical parameter is greater than or equal to the target output.

A determination result that the currently outputted electrical parameter is greater than or equal to the target output indicates that the currently outputted electrical parameter of the direct-current hydrogen production power supply is greater than the desired output, and the method proceeds to step S602.

In step S602, the direct-current hydrogen production power supply switches to the non-MPPT mode, and the actually outputted electrical parameter of the direct-current hydrogen production power supply in the non-MPPT mode is modified based on the target output that serves as the control instruction.

A determination result that the currently outputted electrical parameter is less than the target output indicates that the currently outputted electrical parameter of the direct-current hydrogen production power supply fails to reach the desired output, the method proceeds to step S603, and the direct-current hydrogen production power supply outputs at a maximum capacity.

In step S603, the direct-current hydrogen production power supply switches to the MPPT mode.

In practice, the maximum limit is acquired based on the predetermined correspondence between the input voltage of the direct-current hydrogen production power supply and the maximum limit in various manners, two of which are described below.

In a first manner, the maximum outputted electrical parameter is acquired based on the input voltage from the predetermined correspondence between the input voltage and the maximum outputted electrical parameter, where the maximum outputted electrical parameter is determined as the target output. That is, the outputted electrical parameter is directly determined.

In a second manner, the duty cycle limit is acquired based on the input voltage from a predetermined correspondence between the input voltage and the duty cycle of the power electronic switching device, or the conduction angle limit is acquired based on the input voltage from a predetermined correspondence between the input voltage and the conduction angle of the power electronic switching device, where an outputted electrical parameter corresponding to the duty cycle limit or the conduction angle limit is determined as the target output. That is, the duty cycle limit or the conduction angle limit is directly determined.

In practice, the electrical parameter includes at least one of a voltage, a current and a power.

The two manners are illustrated below with an operation of the direct-current off-grid photovoltaic hydrogen production system as an example.
1. The photovoltaic array outputs a direct-current voltage when being illuminated by sun light.
2. The direct-current hydrogen production power supply starts on receipt of a start-up instruction from the hydrogen production system controller.
3. The direct-current hydrogen production power supply receives the output electrical parameter instruction from the hydrogen production system controller, for example, one of an output voltage instruction Uref, an output current instruction Iref, and an output power instruction Pref.

The input voltage Vpv of the direct-current hydrogen production power supply is calculated/detected, and the maximum outputted electrical parameter is acquired based on the predetermined correspondence between the input voltage Vpv and the maximum outputted electrical parameter.
5. A minimum between value indicated by the output electrical parameter instruction and the maximum outputted electrical parameter is determined as the target output, for example, one of a target output voltage Uref2, a target output current Iref2, and a target output power Pref2.
6. The currently outputted electrical parameter of the direct-current hydrogen production power supply is calculated/detected.
7. The currently outputted electrical parameter is compared with the target output.

That is, the currently outputted voltage Ufdb is compared with the target output voltage Uref_2, the currently outputted current Ifdb is compared with the target output current Iref_2, and the currently outputted power Pfdb is compared with the target output power Pref_2.
7.1. In a case that the currently outputted electrical parameter is greater than or equal to the target output, the actually outputted electrical parameter of the direct-current hydrogen production power supply is modified based on the target output, and processing 3 to 7 is repeated.
7.2. Otherwise, the direct-current hydrogen production power supply operates in the MPPT mode, and then processing 3 to 7 is repeated.

It should be noted that the correspondence between the input voltage Vpv and the outputted maximum voltage Umax of the direct-current hydrogen production power supply may be represented as a function: Umax=function(Vpv).

The function is a monotone nondecreasing function. That is, Vpv is in one to one correspondence with Umax. For example, there is Umax=(Vpv-800)/1300^{∗}Umax_N, an upper limit is Umax_N, and a lower limit is 0. Umax_N represents a rated value of Umax.

Similarly, the correspondence between the input voltage Vpv and the outputted maximum current Imax of the direct-current hydrogen production power supply may also be represented as a monotone nondecreasing function. The correspondence between the input voltage Vpv and the outputted maximum power Pmax of the direct-current hydrogen production power supply may be represented as a monotone nondecreasing function.

It should be noted that a monotone nondecreasing function f(x) is defined as follows. For two independent variables x1 and x2, there is constantly f(x1)≥f(x2) in a case of x1>x2.

It should be noted that according to the conventional technology, the direct-current hydrogen production power supply fails to be informed of a sudden change in photovoltaic power in time and thus fails to respond to the sudden change timely in a case of a sudden drop in the photovoltaic power (since the sudden drop lasts for less than 10ms while a period for the MPPT mode is greater than 100ms), resulting in oscillation in an input voltage (that is, PV voltage) of the direct-current hydrogen production power supply, and even that the input voltage sharply drops to be less than an operation voltage of the direct-current hydrogen production power supply. As a result, the direct-current hydrogen production power supply power shuts down due to failure or power cut, and the hydrogen production system is triggered abnormally, and there is a potential safety hazard.

According to the present disclosure, however, the direct-current hydrogen production power supply can adapt the sudden change in the input voltage (that is, the PV voltage) (which is acquired by sampling and generally lasts for less than 1ms) resulted from the sudden drop in the photovoltaic power (which generally lasts for less than 10ms), so as to modify the output power to match the input power, thereby avoiding shutdown due to oscillation in the input voltage or excessively low input voltage and ensuring the stability and security of a direct-current off-grid photovoltaic hydrogen production system. In addition, the power supply can resume operating in the MPPT mode as long as the photovoltaic power recovers.

A direct-current off-grid photovoltaic hydrogen production system is further provided according to another embodiment of the present disclosure.

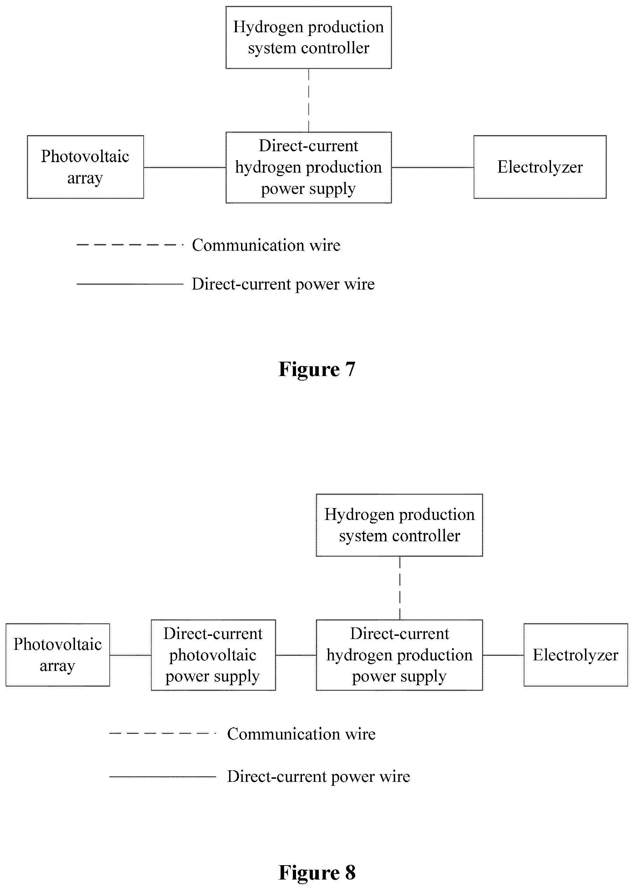

As shown in Figure 7, the direct-current off-grid photovoltaic hydrogen production system includes a photovoltaic array, a direct-current hydrogen production power supply, an electrolyzer and a hydrogen production system controller.

An output end of the photovoltaic array is connected to an input end of the direct-current hydrogen production power supply.

An output end of the direct-current hydrogen production power supply is connected to the electrolyzer.

The direct-current hydrogen production power supply is in communication connection with the hydrogen production system controller.

The direct-current hydrogen production power supply is configured to perform the method for controlling a direct-current off-grid photovoltaic hydrogen production system.

The direct-current hydrogen production power supply may refer to the method for controlling a direct-current off-grid photovoltaic hydrogen production system according to any one of the embodiments described above for details, and thus is not described in detail herein.

In practice, as shown in Figure 8, the direct-current off-grid photovoltaic hydrogen production system further includes a direct-current photovoltaic power supply arranged between the photovoltaic array and the direct-current hydrogen production power supply.

A direct-current output end of the photovoltaic array is connected to the direct-current photovoltaic power supply. A direct-current output end of the direct-current photovoltaic power supply is connected to the direct-current hydrogen production power supply. A direct-current output end of the direct-current hydrogen production power supply is connected to the electrolyzer.

A voltage between an output end of the direct-current photovoltaic power supply and an input end of the direct-current hydrogen production power supply is defined as a direct-current bus voltage. The direct-current bus voltage is normally greater than 1000V

Similarly, the input voltage Vpv of the direct-current hydrogen production power supply is the direct-current bus voltage.

According to the present disclosure, the direct-current off-grid photovoltaic hydrogen production system can stably operate without additional hardware or device, so as to avoid oscillation in the photovoltaic voltage and preventing the photovoltaic voltage from being less than a limit of the input voltage of the direct-current hydrogen production power supply in case of sudden drop in the photovoltaic power.

Features described in various embodiments in this specification may be replaced or combined with each other. The same or similar parts among the embodiments may be referred to each other, and each of the embodiments emphasizes the differences from others. Since the system or the embodiment of the system is basically similar to the embodiments of the method, the description of the system is relatively simple, and reference may be made to the description in the embodiments of the method for relevant matters. The above-described system and the embodiments of the system are only illustrative. Units described as separate components may be or not be physically separate from each other. Components shown as units may be or be not physical units. That is, the components may be located in one place or may be distributed onto multiple network units. Some or all modules thereof may be selected to implement the embodiments, depending on actual applications. Those skilled in the art may understand and implement the embodiments without any creative work.

Those skilled in the art may further know that units and steps described in conjunction with the embodiments disclosed herein may be implemented by electronic hardware, computer software or a combination thereof. In order to clearly describe interchangeability of the hardware and the software, steps and units in each embodiment are described generally based on functions in the specification. Whether these functions are performed in hardware or software depends on the specific application and design constraints for the technical solution. Those skilled in the art may implement the described functions for each application in various manners.

Based on the above description of the disclosed embodiments, those skilled in the art can implement or carry out the present disclosure. It is apparent for those skilled in the art to make various modifications to these embodiments. Therefore, the present disclosure is not limited to the embodiments illustrated herein, but should be defined by the widest scope consistent with the principle and novel features disclosed herein.

## Claims

1. A method for controlling a direct-current off-grid photovoltaic hydrogen production system, wherein the method is applied to a direct-current hydrogen production power supply in the direct-current off-grid photovoltaic hydrogen production system, and the method comprises:
receiving an output electrical parameter instruction;
determining an input voltage of the direct-current hydrogen production power supply, and determining a maximum limit based on a correspondence between the input voltage and the maximum limit; and
determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode, wherein the operation mode comprises an MPPT mode and a non-MPPT mode.

2. The method for controlling a direct-current off-grid photovoltaic hydrogen production system according to claim 1, further comprising:
determining the currently outputted electrical parameter of the direct-current hydrogen production power supply before the determining an operation mode of the direct-current hydrogen production power supply based on the output electrical parameter instruction, the maximum limit and a currently outputted electrical parameter of the direct-current hydrogen production power supply.

3. The method for controlling a direct-current off-grid photovoltaic hydrogen production system according to one of the previous claims, wherein
the maximum limit comprises at least one of a maximum outputted electrical parameter, a duty cycle limit or a conduction angle limit.

4. The method for controlling a direct-current off-grid photovoltaic hydrogen production system according to one of the previous claims, wherein the determining an operation mode of the direct-current hydrogen production power supply based on the output electrical parameter instruction, the maximum limit and a currently outputted electrical parameter of the direct-current hydrogen production power supply comprises:
determining whether the currently outputted electrical parameter of the direct-current hydrogen production power supply is greater than or equal to a value indicated by the output electrical parameter instruction;
controlling the direct-current hydrogen production power supply to operate in the non-MPPT mode in a case that the currently outputted electrical parameter of the direct-current hydrogen production power supply is greater than or equal to the value indicated by the output electrical parameter instruction; and
controlling the direct-current hydrogen production power supply to operate in the MPPT mode in a case that the currently outputted electrical parameter of the direct-current hydrogen production power supply is less than the value indicated by the output electrical parameter instruction.

5. The method for controlling a direct-current off-grid photovoltaic hydrogen production system according to one of the previous claims, wherein the modifying an actually outputted electrical parameter of the direct-current hydrogen production power supply in the determined operation mode comprises:
controlling, based on the output electrical parameter instruction serving as a control instruction, the direct-current hydrogen production power supply to operate in the non-MPPT mode, to modify the actually outputted electrical parameter of the direct-current hydrogen production power supply in the non-MPPT mode to be equal to the value indicated by the output electrical parameter instruction.

6. The method for controlling a direct-current off-grid photovoltaic hydrogen production system according to one of the previous claims, further comprising:
after the determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode,
determining whether the input voltage of the direct-current hydrogen production power supply is lower than a preset voltage threshold; and
modifying the actually outputted electrical parameter of the direct-current hydrogen production power supply in the non- MPPT mode based on the maximum limit serving as the control instruction, in a case that the input voltage of the direct-current hydrogen production power supply is lower than the preset voltage threshold.

7. The method for controlling a direct-current off-grid photovoltaic hydrogen production system according to one of the previous claims, wherein
the maximum limit is a maximum outputted electrical parameter; and
wherein the modifying the actually outputted electrical parameter of the direct-current hydrogen production power supply in the non-MPPT mode based on the maximum limit serving as the control instruction comprises: modifying the actually outputted electrical parameter of the direct-current hydrogen production power supply in the non-MPPT mode based on the maximum outputted electrical parameter serving as the control instruction.

8. The method for controlling a direct-current off-grid photovoltaic hydrogen production system according to one of the previous claims, wherein
the maximum limit is a duty cycle limit or a conduction angle limit; and
wherein the modifying the actually outputted electrical parameter of the direct-current hydrogen production power supply in the non-MPPT mode based on the maximum limit serving as the control instruction comprises: controlling, based on the duty cycle limit or the conduction angle limit serving as the control instruction, a power electronic switching device in the direct-current hydrogen production power supply to be turned on or off, so as to modify the actually outputted electrical parameter of the direct-current hydrogen production power supply in the non- MPPT mode.

9. The method for controlling a direct-current off-grid photovoltaic hydrogen production system according to one of the previous claims, wherein
the maximum limit is a duty cycle limit or a conduction angle limit; and
wherein the method further comprises: after the determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode,
controlling a power electronic switching device in the direct-current hydrogen production power supply based on the duty cycle limit in a case that a calculated duty cycle of the power electronic switching device is greater than the duty cycle limit, or controlling the power electronic switching device in the direct-current hydrogen production power supply based on the conduction angle limit in a case that a calculated conduction angle of the power electronic switching device is greater than the conduction angle limit; and
controlling the power electronic switching device in the direct-current hydrogen production power supply based on the calculated duty cycle in a case that the calculated duty cycle of the power electronic switching device is less than or equal to the duty cycle limit, or controlling the power electronic switching device in the direct-current hydrogen production power supply based on the calculated conduction angle in a case that the calculated conduction angle of the power electronic switching device is less than or equal to the conduction angle limit.

10. The method for controlling a direct-current off-grid photovoltaic hydrogen production system according to one of the previous claims, wherein the determining an operation mode of the direct-current hydrogen production power supply based on the output electrical parameter instruction, the maximum limit and a currently outputted electrical parameter of the direct-current hydrogen production power supply, and modifying an actually outputted electrical parameter of the direct-current hydrogen production power supply in the determined operation mode comprises:
determining a minimum between a value indicated by the output electrical parameter instruction and the maximum limit as a target output; and
determining the operation mode of the direct-current hydrogen production power supply based on the currently outputted electrical parameter of the direct-current hydrogen production power supply and the target output, and modifying the actually outputted electrical parameter of the direct-current hydrogen production power supply in the determined operation mode.

11. The method for controlling a direct-current off-grid photovoltaic hydrogen production system according to one of the previous claims, wherein the determining the operation mode of the direct-current hydrogen production power supply based on the currently outputted electrical parameter of the direct-current hydrogen production power supply and the target output, and modifying the actually outputted electrical parameter of the direct-current hydrogen production power supply in the determined operation mode comprises:
determining whether the currently outputted electrical parameter is greater than or equal to the target output;
controlling the direct-current hydrogen production power supply to operate in the non-MPPT mode, and modifying the actually outputted electrical parameter of the direct-current hydrogen production power supply based on the target output that serves as a control instruction, in a case that the currently outputted electrical parameter is greater than or equal to the target output; and
controlling the direct-current hydrogen production power supply to operate in the MPPT mode in a case that the currently outputted electrical parameter is less than the target output.

12. The method for controlling a direct-current off-grid photovoltaic hydrogen production system according to any one of claims 1 to 11, wherein
a maximum outputted electrical parameter, a value indicated by the output electrical parameter instruction, the currently outputted electrical parameter and the actually outputted electrical parameter each comprise at least one of a voltage, a current and a power.

13. A direct-current off-grid photovoltaic hydrogen production system, comprising: a photovoltaic array, a direct-current hydrogen production power supply, an electrolyzer and a hydrogen production system controller, wherein
an output end of the photovoltaic array is connected to an input end of the direct-current hydrogen production power supply;
an output end of the direct-current hydrogen production power supply is connected to the electrolyzer;
the direct-current hydrogen production power supply is in communication connection with the hydrogen production system controller; and
the direct-current hydrogen production power supply is configured to perform the method for controlling a direct-current off-grid photovoltaic hydrogen production system according to any one of claims 1 to 12.

14. The direct-current off-grid photovoltaic hydrogen production system according to claim 13, further comprising:
a direct-current photovoltaic power supply arranged between the photovoltaic array and the direct-current hydrogen production power supply.
